# EUROPÄISCHE PATENTSCHRIFT

(11) **EP 2 510 560 B1**
(45) Veröffentlichungstag und Bekanntmachung des Hinweises auf die Patenterteilung: **12.08.2015**
(21) Anmeldenummer: 10798483.3
(22) Anmeldetag: 10.11.2010
(51) Int. Cl.: H02N 2/02

(54) **NANOPOSITIONIERER**
NANOPOSITIONER
NANOPOSITIONNEUR

(30) Priorität: 10.12.2009 DE 102009057746
(43) Veröffentlichungstag der Anmeldung: 17.10.2012
(73) Patentinhaber: Forschungszentrum Jülich GmbH, 52425 Jülich (DE)
(72) Erfinder: CHEREPANOV, Vasily, 52428 Jülich (DE); VOIGTLÄNDER, Bert, 52428 Jülich (DE); COENEN, Peter, 52428 Jülich (DE)
(86) Internationale Anmeldenummer: PCT/DE2010/001316
(87) Internationale Veröffentlichungsnummer: WO 2011/069476

(56) Entgegenhaltungen:
- WO-A1-2007/058467
- US-A1- 2009 146 075
- US-A1- 2009 225 297
- SILVEIRA WILLIAM R ET AL: "A vertical inertial coarse approach for variable temperature scanned probe microscopy", REVIEW OF SCIENTIFIC INSTRUMENTS, AIP, MELVILLE, NY, US, vol. 74, no. 1, 1 January 2003 (2003-01-01), pages 267-269, XP012040210, ISSN: 0034-6748, DOI: 10.1063/1.1524712

## Beschreibung

Die Erfindung betrifft einen Nanopositionierer.

### Stand der Technik

In der Nanotechnologie besteht vielfach das Bedürfnis, ein Objekt mit einer Präzision von wenigen Nanometern bewegen zu können und es zugleich über makroskopische Distanzen von Mikrometern bis Millimetern bewegen zu können. Piezoelektrische Stellglieder sind durch das Anlegen eines elektrischen Feldes über das Piezomaterial mit subatomarer Präzision auslenkbar. Die maximale Auslenkung ist auf wenige Mikrometer beschränkt, da ansonsten das nötige elektrische Feld so stark wird, dass es das Piezomaterial dauerhaft depolarisiert und damit unbrauchbar macht.

Um die subatomare Präzision mit einem makroskopischen Verstellbereich zu kombinieren, werden daher Slip-Stick-Antriebe verwendet, bei denen das zu bewegende Objekt sich in Haftreibung zu einer Auflage am Antrieb befindet. Bei einer langsamen Bewegung des Antriebs bewegt sich das Objekt mit. Bei einer schnellen Rückwärtsbewegung wird dagegen die Haftreibung durchbrochen, und das Objekt bewegt sich nicht. Auf diese Weise kann der enge Verstellbereich piezoelektrischer Stellglieder beim Bewegen eines Objekts über makroskopische Distanzen beliebig oft vervielfältigt werden.

Für das Funktionieren solcher Antriebe ist es wichtig, dass die Reibungsverhältnisse zwischen dem Objekt und der Auflage definiert sind. Es kommt vor allem darauf an, dass zwischen dem Objekt und der Auflage eine definierte Normalkraft wirkt, weil die Reibverhältnisse maßgeblich durch diese Kraft bestimmt sind.

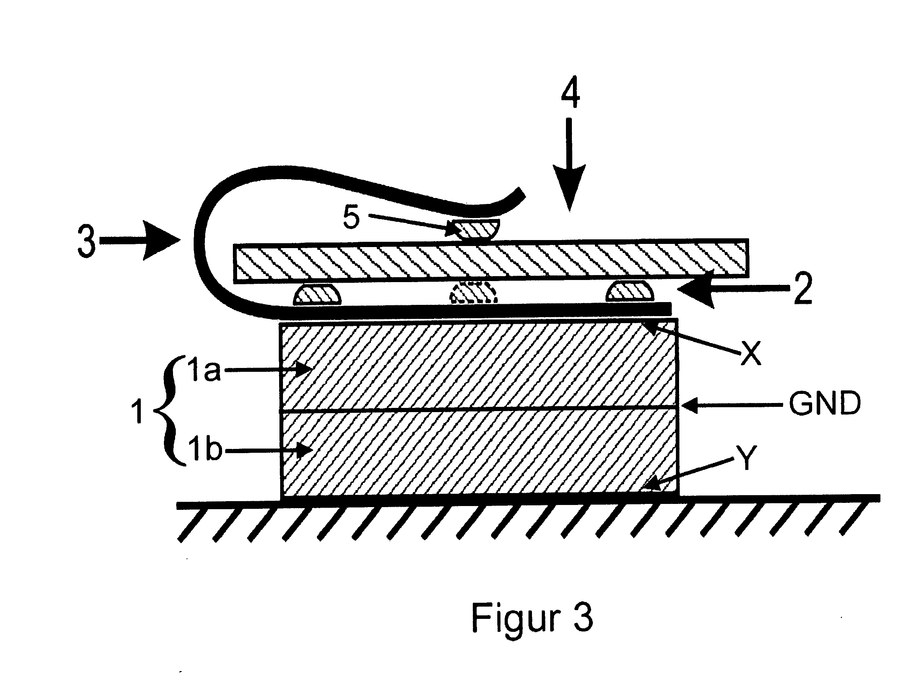

Aus Figur 3 in (H. J. Hug, B. Stiefel, P. J. A. van Schendel, A. Moser, S. Martin, H.-J. Güntherodt, "A low temperature ultrahigh vaccum scanning force microscope", Review of Scientific Instruments 70 (1999), 3625-3640) ist ein Nanopositionierer bekannt, bei dem das Objekt zwischen zwei identische Antriebe eingebracht wird, die von einer Feder zusammen gedrückt werden. Die Feder übt eine definierte Normalkraft aus, die zwischen dem Objekt und den Auflagen der Antriebe wirkt. Nachteilig ist hier der komplette Antrieb doppelt vorhanden.

Dies ist ein hoher Preis für die Ausübung einer definierten Normalkraft.

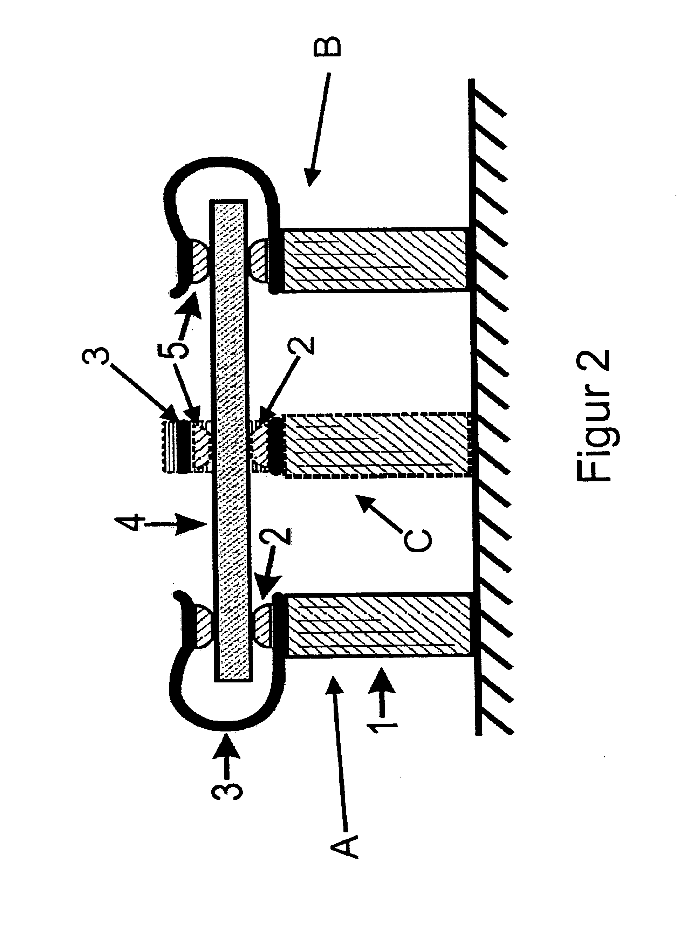

Aus Figur 2a in (T. Mashoff, M. Pratzer, M. Morgenstern, "A low-temperature high resolution scanning tunneling microscope with a three-dimensional magnetic vector field operating in ultrahigh vacuum", Review of Scientific Instruments 80 (2009), 053702) ist ein Nanopositionierer bekannt, bei dem die Normalkraft durch eine zwischen dem Objekt und einem Fixpunkt im Positionierer gespannte Feder ausgeübt wird. Hierfür ist nur ein Antrieb erforderlich. Nachteilig ist die Bewegung schlecht reproduzierbar. Insbesondere bei größeren Auslenkungen bewegt sich das Objekt langsamer oder bleibt steckern.

Weitere Beispiele für Nanopositionierer sind in US 2009/146075 und US 2009/225297 zu finden.

### Aufgabe und Lösung

Es ist daher die Aufgabe der Erfindung, einen Nanopositionierer zur Verfügung zu stellen, bei dem eine definierte Normalkraft zwischen dem zu bewegenden Objekt und seiner Auflage im Positionierer wirkt, ohne dass allein für die Ausübung dieser Normalkraft der gesamte Antrieb verdoppelt wird.

Diese Aufgabe wird erfindungsgemäß gelöst durch einen Nanopositionierer gemäß Hauptanspruch. Weitere vorteilhafte Ausgestaltungen ergeben sich aus den darauf rückgezogenen Unteransprüchen.

### Gegenstand der Erfindung

Im Rahmen der Erfindung wurde ein Nanopositionierer entwickelt. Dieser Nanopositionierer umfasst mindestens ein Stellglied mit mindestens einer durch Auslenkung des Stellglieds bewegbaren Auflage für das zu bewegende Objekt sowie mindestens ein Federelement, welches das zu bewegende Objekt mit einer zwischen dem Objekt und der Auflage wirkenden Normalkraft zu beaufschlagen vermag, gemäß Anspruch 1.

Der Begriff der Auflage ist nicht so zu verstehen, dass die Gravitationskraft zwangsläufig einen Beitrag zu der zwischen dem Objekt und der Auflage wirkenden Normalkraft leisten muss. Die Normalkraft wird maßgeblich durch die Rückstellkraft des Federelements bewirkt. Im Vergleich zu dieser Rückstellkraft ist der Beitrag der Gravitationskraft zur Normalkraft wesentlich geringer. Somit kann der Nanopositionierer lageunabhängig betrieben werden.

Erfindungsgemäß ist nun das Federelement derart mit der Auflage verbunden, dass der Spannungszustand des Federelements unabhängig von der Position des zu bewegenden Objekts ist.

Auf Grund dieser Maßnahme wird unabhängig von der konkreten Position des zu bewegenden Objekts eine reine Normalkraft auf das Objekt ausgeübt und keine Lateralkraft, die der Bewegung des Objekts durch das Stellglied entgegen wirkt und sie somit einschränkt oder unreproduzierbar macht.

Unter einer Verbindung mit der Auflage im Sinne dieser Erfindung ist nicht nur ein unmittelbarer Kontakt in dem Sinne zu verstehen, dass etwa die Auflage auf einem Ende des Federelements angeordnet sein muss. Die erfindungsgemäße Funktion wird dadurch bewirkt, dass bei einer Bewegung der Auflage auch das Federelement als Ganzes mitbewegt wird. Hierfür genügt es, beispielsweise das Federelement an dem Bereich des Stellglieds zu befestigen, in dem sich die Auflage befindet.

Ursache für die Bewegung des Objekts durch den Nanopositionierer ist stets eine Bewegung der Auflage, die wiederum durch eine Auslenkung des Stellglieds verursacht wird. Daher bezieht sich die Erfindung auch auf einen Nanopositionierer, der dem Oberbegriff des Anspruchs 1 genügt und bei dem der Spannungszustand des Federelements unabhängig von der Auslenkung des Stellglieds ist.

Nach dem Stand der Technik gemäß (Mashoff et al.) war das Federelement zwischen das Objekt und den Grundkörper, gegen den es bewegt wurde, gespannt. Selbst wenn dieses Federelement zu Beginn der Bewegung des Objekts ausschließlich eine zwischen dem Objekt und der Auflage wirkende Normalkraft ausübte, führte die erwünschte laterale Bewegung des Objekts unweigerlich dazu, dass die Rückstellkraft des Federelements eine laterale Komponente erhielt. Je weiter das Objekt aus seiner Anfangslage heraus bewegt wurde, desto stärker wurde diese unerwünschte laterale Kraft. Dies führte zu Problemen bei Antrieben, bei denen die Kontaktstelle zwischen Auflage und Objekt in definierter Weise zwischen Haftreibung und Gleitreibung wechseln muss (Slip-Stick-Antriebe). Je weiter sich das Objekt aus seiner Ursprungslage entfernt hatte, desto langsamer und unreproduzierbarer wurde die Bewegung, bis sie schließlich stecken blieb.

Der erfindungsgemäße Nanopositionierer löst dieses Problem. Bei der Bewegung des Objekts ändern sich weder die Stärke noch die Richtung der durch das Federelement ausgeübten, zwischen dem Objekt und der Auflage wirkenden Kraft. Dieser Vorteil wirkt sich besonders dann aus, wenn das Objekt über eine Entfernung bewegbar ist, die größer ist als der Verstellbereich des Stellglieds. In einer besonders vorteilhaften Ausgestaltung der Erfindung ist daher die Auflage durch Bewegung des Stellglieds gegen das zu bewegende Objekt verschiebbar.

In einer weiteren besonders vorteilhaften Ausgestaltung der Erfindung ist ein Punkt des Federelements mit der Auflage verbunden, und das Federelement ist zu einem Punkt auf einer Oberfläche des Objekts geführt, die der mit der Auflage in Kontakt stehenden Oberfläche des Objekts gegenüber liegt, so dass es dort die Normalkraft ausübt. Es kann beispielsweise um den Ort, an dem sich im Betrieb das zu bewegende Objekt befindet, herum oder aber auch durch das zu bewegende Objekt hindurch zu diesem Punkt geführt sein. Das Federelement kann beispielsweise eine Klemme sein, deren eines Ende an der Auflage oder in dem Bereich des Stellglieds, in dem sich die Auflage befindet, befestigt ist. Eine Oberfläche des zu bewegenden Objekts liegt im Betrieb des Nanopositionierers auf der Auflage auf. Ist die Klemme nun um das Objekt herum geführt, übt ihr anderes Ende die Normalkraft nicht auf der gleichen Oberfläche des Objekts aus, die auf der Auflage aufliegt. Stattdessen wird die Normalkraft auf der dieser Oberfläche gegenüber liegenden Oberfläche des Objekts ausgeübt. Das Objekt kann somit zwischen die Auflage und das nicht an der Auflage befestigte Ende der Klemme eingeklemmt werden.

Vorteilhaft ist dabei an dem Ort des Federelements, an dem dieses die Normalkraft auf das Objekt ausübt, ein Zwischenstück angeordnet. Dieses Zwischenstück kann beispielsweise so geformt sein, etwa gerundet oder geschrägt, dass das Objekt zwischen das Zwischenstück und die Auflage am Stellglied eingeschoben werden kann, ohne dabei das Federelement separat manipulieren zu müssen. Die Form des Zwischenstücks sorgt dafür, dass ein Teil der Kraft, mit der das Objekt in den Spalt zwischen dem Zwischenstück und der Auflage eingeschoben wird, eine zu dieser Kraft senkrechte Komponente zum Öffnen dieses Spalts gegen die Rückstellkraft des Federelements erhält. Dies ist von besonderer Bedeutung im Ultrahochvakuum (UHV), wo die gleichzeitige Manipulation mehrerer Objekte über Wobble-Sticks und ähnliche Vorrichtungen eine besondere Herausforderung darstellt.

In einer besonders vorteilhaften Ausgestaltung der Erfindung hat das Zwischenstück den gleichen Haft- und/oder Gleitreibungskoeffizienten gegen das Objekt wie die Auflage. Es kann insbesondere aus dem gleichen Material bestehen wie die Auflage. Auf Grund des dritten Newton'schen Axioms ist die Normalkraft, die das Federelement über das an ihm angeordnete Zwischenstück auf das Objekt ausübt, gleich der Normalkraft, die zwischen dem Objekt und der Auflage wirkt. Dann ist zum Überwinden der Haftreibung zwischen Zwischenstück und Objekt bzw. zwischen Objekt und Auflage die gleiche laterale Kraft erforderlich. Dies ist von besonderer Bedeutung bei Slip-Stick-Antrieben, bei denen das Objekt lateral sowohl gegen die Auflage als auch gegen das Zwischenstück bewegt wird. Geht die Kontaktstelle zwischen dem Objekt und der Auflage von der Haftreibung in die Gleitreibung über, muss auch die Kontaktstelle zwischen dem am Federelement angeordneten Zwischenstück und dem Objekt in die Gleitreibung übergehen. Ansonsten würden unerwünschte Lateralkräfte auf das Objekt ausgeübt.

Die Flächeninhalte der Kontaktstellen zwischen Zwischenstück und Objekt einerseits und zwischen Objekt und Auflage andererseits können sich unterscheiden, beispielsweise wenn das Objekt auf mehreren Auflagen aufliegt, die Normalkraft aber nur durch ein Zwischenstück ausgeübt wird. Dies ändert in erster Näherung jedoch nichts an den Reibungskräften. Diese sind jeweils das Produkt aus dem Reibungskoeffizienten und der insgesamt wirkenden Normalkraft; hingegen sind sie unabhängig von den Flächeninhalten der Kontaktstellen. Somit haben gleiche Reibungskoeffizienten von Zwischenstück und Auflage grundsätzlich die beschriebene vorteilhafte Wirkung.

In einer besonders vorteilhaften Ausgestaltung der Erfindung ist die Geschwindigkeit, mit der die Auflage bewegbar ist, in einem Bereich variabel, der sowohl eine langsame Bewegung, bei der die Auflage in Haftreibung mit dem zu bewegenden Objekt ist, als auch eine schnelle Bewegung, bei der die Auflage gegen das Objekt gleitet, umfasst. Dann kann der Nanopositionierer als Slip-Stick-Antrieb arbeiten und ist insofern nicht mehr auf die maximal mögliche Auslenkung seines Stellglieds beschränkt. Wird die Auflage langsam bewegt, so bewegt sie sich gemeinsam mit dem Objekt. Die Auflage wird anschließend schnell zurückbewegt. Damit sich das Objekt mit der gleichen Beschleunigung zurückbewegt, müsste es auf Grund seiner Massenträgheit mit einer Kraft beaufschlagt werden, die das Produkt aus seiner Masse und der Beschleunigung ist. Diese Kraft müsste durch die Kontaktstelle zwischen Objekt und Auflage vermittelt werden. Sie ist jedoch größer als die maximale Haftreibungskraft dieser Kontaktstelle, so dass die Haftreibung überwunden wird und die Auflage gegen das Objekt gleitet. Wenn die Auflage in ihre Ausgangslage zurückgekehrt ist, kann dieser Zyklus von neuem beginnen und das Objekt so immer weiter verschoben werden.

Für den Slip-Stick-Antrieb ist es besonders vorteilhaft, dass sich erfindungsgemäß die Normalkraft zwischen der Auflage und dem Objekt bei der Bewegung des Objekts nicht ändert. Welche Kraft zur Überwindung der Haftreibung an der Kontaktstelle zwischen Auflage und Objekt notwendig ist, ist direkt proportional zur an dieser Kontaktstelle wirkenden Normalkraft. Die Bewegung wird reproduzierbarer, wenn diese Kraft immer gleich ist.

Vorteilhaft umfasst das Stellglied mindestens ein Piezoelement. Piezoelemente können durch Anlegen elektrischer Felder gedehnt oder geschert werden. Da dies typischerweise mit Piezokonstanten von wenigen Nanometern pro Volt der über das Piezomaterial angelegten Spannung geschieht, kann die Dehnung oder Scherung mit subatomarer Präzision erfolgen.

Vorteilhaft ist die Auflage in zwei linear unabhängigen Richtungen bewegbar. Da eine Bewegung des Objekts durch eine Bewegung der Auflage bewirkt wird, ist dies gleichbedeutend damit, dass das Objekt in zwei linear unabhängigen Richtungen bewegbar ist. Dann kann der Nanopositionierer beispielsweise in einem Rastersondenmikroskop eingesetzt werden. Mit dem Mikroskop können dann verschiedene, in makroskopischen Abständen voneinander liegende Gebiete auf der Objektoberfläche untersucht werden. Diese Gebiete können jeweils angefahren werden, indem der Nanopositionierer als Slip-Stick-Antrieb betrieben wird, d. h. das Objekt abwechselnd in Haft- und Gleitreibung zur Auflage steht und gegen die Auflage bewegt wird. Die Gebiete selbst können dann im Rahmen des Mikroskopbetriebs abgerastert werden, indem der Nanopositionierer in seinem Feinregelbereich betrieben wird, d. h. innerhalb des Verstellbereichs des Stellglieds. In diesem Feinregelbereich besteht ständige Haftreibung zwischen der Auflage und dem Objekt.

Zur Bewegung der Auflage in zwei Dimensionen können beispielsweise verschiedene Seitenflächen eines Piezoelements mit voneinander unabhängigen Elektroden metallisiert sein, so dass das Material des Piezoelements mit elektrischen Feldern in verschiedenen Richtungen beaufschlagt werden kann. Röhrenförmige Piezos können mit einer entsprechend segmentierten Metallbeschichtung ausgestattet sein.

Vorteilhaft ist die Auflage derart ausgebildet, dass die Normalkraft zwischen drei voneinander beabstandeten Orten am zu bewegenden Objekt und der Auflage wirkt. Eine Ebene ist durch drei Punkte definiert. Somit liegt ein planes Objekt immer stabil auf einer derart ausgebildeten Auflage auf. Die Orte können insbesondere mit dem gleichen Stellglied verbunden sein. Dann entfällt die Notwendigkeit, zur Bewegung des Objekts die Auslenkungen mehrerer Stellglieder miteinander zu synchronisieren.

In einer besonders vorteilhaften Ausgestaltung der Erfindung sind mindestens zwei Einheiten aus Stellglied, Auflage und Federelement voneinander beabstandet angeordnet und so ausgebildet, dass sie verschiedene Bereiche desselben Objekts bewegen können. Sind die Einheiten beispielsweise an gegenüber liegenden Kanten eines planaren Objekts angeordnet, so lässt sich dieses Objekt um eine Achse drehen, die zur Normale auf der Objektoberfläche parallel ist. Dazu werden die beiden Kanten, an denen sich die Einheiten befinden, von diesen in entgegen gesetzte Richtungen bewegt.

Vorteilhaft ist ein Stützlager mit einer gegenüber der Bewegungsebene des Objekts schrägen oder gerundeten Fläche vorgesehen, auf die das Objekt verschiebbar ist. Dann kann das Objekt nicht nur in einer Ebene bewegt werden, sondern auch senkrecht zu dieser Ebene. Der Nanopositionierer kann dann etwa in einem Rastersondenmikroskop nicht nur zum Scannen der Probe, sondern auch zum Zusammenführen von Probe und Sonde aus makroskopischer Entfernung verwendet werden.

Vorteilhaft umfassen die Auflage und/oder das Zwischenstück Stahl, Rubin, Quarz und/oder Saphir. Diese Materialien haben sich in den Versuchen der Erfinder als besonders vorteilhaft für den Slip-Stick-Betrieb mit abwechselnder Haft- und Gleitreibung zum Objekt erwiesen.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Ausführungsbeispiel des erfindungsgemäßen Nanopositionierers mit zwei beabstandeten Einheiten aus Stellglied, Auflage und Federelement.
- Figur 2:: Ausführungsbeispiel des erfindungsgemäßen Nanopositionierers mit drei beabstandeten Einheiten aus Stellglied, Auflage und Federelement.
- Figur 3:: Ausführungsbeispiel des erfindungsgemäßen Nanopositionierers mit einer Auflage, die an drei voneinander beabstandeten Orten mit dem Objekt in Kontakt ist.

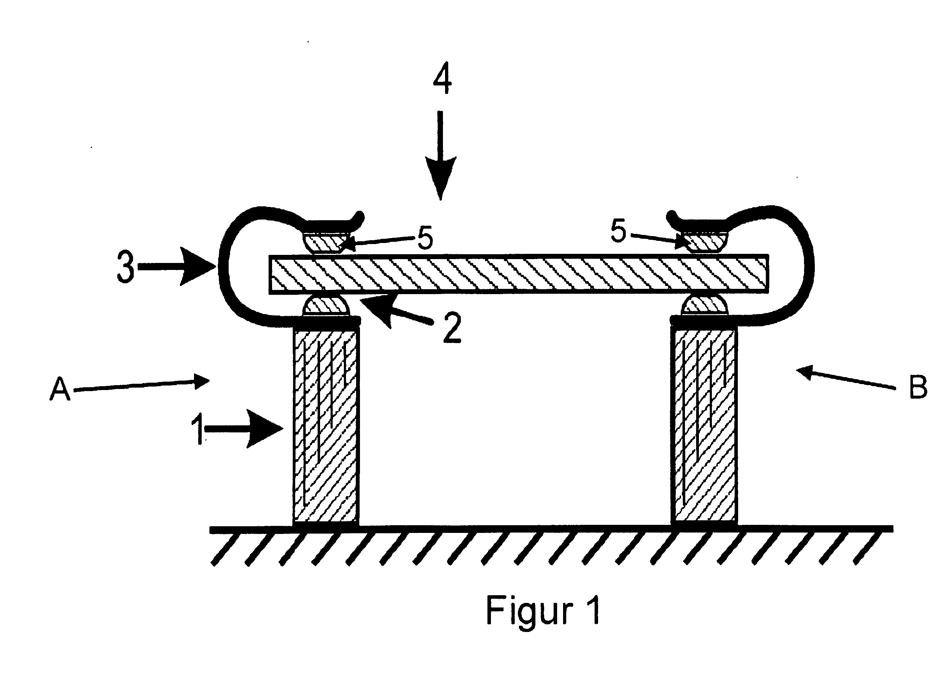

Figur 1 zeigt ein Ausführungsbeispiel des erfindungsgemäßen Nanopositionierers. Dieser verfügt über zwei Einheiten A und B aus Stellglied (Piezoelement) 1, Auflage 2 und Federelement 3, die Bereiche an zwei verschiedenen Kanten des Objekts 4 zu bewegen vermögen. Das Federelement ist jeweils als Klemme ausgebildet, deren eines Ende am oberen Ende des Stellglieds 1, an dem sich die Auflage 2 befindet, befestigt ist und die um das Objekt 4 herum geführt ist. Ihr anderes Ende weist ein Zwischenstück 5 auf, über die die Normalkraft auf die Probe ausgeübt wird. Die Normalkraft wird durch das Bestreben des Federelements hervorgerufen, den Spalt zwischen dem Zwischenstück 5 und der Auflage 2 möglichst klein zu halten. Die Auflage 2 und das Zwischenstück 5 stehen auf gegenüber liegenden Oberflächen des Objekts 4 mit diesem in Kontakt. Die Auflage 2 und das Zwischenstück 5 sind jeweils Halbkugeln aus Stahl, Rubin, Quarz oder Saphir.

Die beiden Einheiten A und B können die Bereiche des Objekts 4, die jeweils zwischen einer Auflage 2 und einem Zwischenstück 5 eingespannt sind, in die gleiche Richtung bewegen. Dann bewegt sich das Objekt 4 horizontal in einer Ebene, die parallel zur Oberfläche des hier planaren Objekts ist. Die beiden Einheiten A und B können die Bereiche aber auch in entgegen gesetzte Richtungen bewegen. Beispielsweise kann die Einheit A den in ihr eingespannten Bereich des Objekts 4 aus der Zeichenebene herausbewegen, während die Einheit B den in ihr eingespannten Bereich des Objekts 4 in die Zeichenebene hineinbewegt. Das Objekt 4 wird dann um eine Achse gedreht, die senkrecht zu seiner Oberfläche ist.

Figur 2 zeigt ein weiteres Ausführungsbeispiel des erfindungsgemäßen Nanopositionierers. Gegenüber dem in Figur 1 gezeigten Ausführungsbeispiel ist hier zusätzlich eine dritte Einheit C aus Stellglied (Piezoelement) 1, Auflage 2 und Federelement 3 vorgesehen, die sich hinter der Zeichenebene befindet und daher gestrichelt umrandet ist. Diese Einheit C kann einen Bereich an einer weiteren Kante des Objekts 4 bewegen.

Die Verwendung dreier Einheiten A, B und C hat den Vorteil, dass die drei Auflagen 2 eine Ebene definieren, in der ein planares Objekt auf allen drei Auflagen 2 ohne Wackeln aufliegt. Zudem kann die Einheit C die schon mit dem in Figur 1 gezeigten Ausführungsbeispiel mögliche Drehung des Objekts 4 unterstützen, d. h. das Drehmoment vergrößern. Dazu muss die Einheit C den in ihr eingespannten Bereich synchron mit den Einheiten A und B horizontal in der Zeichenebene bewegen.

Figur 3 zeigt ein weiteres Ausführungsbeispiel des erfindungsgemäßen Nanopositionierers. In diesem Ausführungsbeispiel ist nur eine Einheit aus Stellglied 1, Auflage 2 und Federelement 3 vorhanden. Das Stellglied 1 umfasst zwei um 90 Grad versetzt übereinander angeordnete Scherpiezos 1a und 1b, die über eine auf Massepotential befindliche Mittelelektrode GND miteinander verbunden sind. Durch Anlegen einer Spannung gegen Masse an die obere Elektrode X des Scherpiezos 1a kann dieses Scherpiezo horizontal in der Zeichenebene geschert und die auf ihm angeordnete Auflage 2 entsprechend bewegt werden. Alle Orte, an denen die Normalkraft zwischen Objekt 4 und Auflage 2 wirkt, sind mit dem gleichen Stellglied 1 verbunden. Durch Anlegen einer Spannung gegen Masse an die untere Elektrode Y des Scherpiezos 1b kann dieses Scherpiezo senkrecht zur Zeichenebene geschert werden. Dabei bewegen sich das Scherpiezo 1a und die auf ihm angeordnete Auflage 2 mit. Diese Bewegung ist unabhängig vom aktuellen Scherungszustand des Scherpiezos 1a. Somit kann die Auflage 2 in zwei linear unabhängigen Richtungen bewegt werden. Die Auflage 2 besteht aus drei einzelnen Halbkugeln aus Stahl, Rubin, Quarz oder Saphir, die an voneinander beabstandeten Orten mit dem Objekt 4 in Kontakt stehen. Auf dieser Auflage liegt das Objekt 4 stets stabil auf. Das Federelement 3 ist dort am Stellglied 1 befestigt, wo sich auch die Auflage 2 befindet. Es ist um das Objekt 4 herum geführt. An seinem freien Ende befindet sich ein Zwischenstück 5, die die Normalkraft auf das Objekt 4 ausübt. Diese Normalkraft wird auf die Oberfläche des Objekts 4 ausgeübt, die derjenigen Oberfläche, die mit der Auflage 2 in Kontakt steht, gegenüber liegt.

## Patentansprüche

1. Nanopositionierer, umfassend mindestens ein Stellglied (1) mit mindestens einer durch Auslenkung des Stellglieds (1) bewegbaren Auflage (2) für das zu bewegende Objekt (4) sowie mindestens ein Federelement (3), welches das zu bewegende Objekt (4) mit einer zwischen dem Objekt (4) und der Auflage (2) wirkenden Normalkraft zu beaufschlagen vermag, wobei das Federelement (3) derart mit der Auflage (2) verbunden ist, dass der Spannungszustand des Federelements (3) unabhängig von der Position des zu bewegenden Objekts (4) ist,
**dadurch gekennzeichnet, dass**
das Federelement (3) derart mit der Auflage (2) verbunden ist, dass es bei einer Bewegung der Auflage (2) als Ganzes mitbewegt wird.

2. Nanopositionierer nach vorhergehendem Anspruch, **dadurch gekennzeichnet, dass** das Objekt (4) über eine Entfernung bewegbar ist, die größer ist als der Verstellbereich des Stellglieds (1).

3. Nanopositionierer nach einem der vorhergehenden Ansprüche, **dadurch gekennzeichnet, dass** die Auflage (2) durch Bewegung des Stellglieds (1) gegen das zu bewegende Objekt (4) verschiebbar ist.

4. Nanopositionierer nach einem der vorhergehenden Ansprüche, **dadurch gekennzeichnet, dass** ein Punkt des Federelements (3) mit der Auflage (2) verbunden ist und das Federelement (3) zu einem Punkt auf einer Oberfläche des Objekts (4) geführt ist, die der mit der Auflage (2) in Kontakt stehenden Oberfläche des Objekts (4) gegenüber liegt, so dass es dort die Normalkraft ausübt.

5. Nanopositionierer nach vorhergehendem Anspruch, **dadurch gekennzeichnet, dass** das Federelement (3) um den Ort, an dem sich im Betrieb das zu bewegende Objekt (4) befindet, herum oder durch das zu bewegende Objekt (4) hindurch zu einem Punkt geführt ist, an dem es die Normalkraft ausübt.

6. Nanopositionierer nach einem der vorhergehenden Ansprüche, **gekennzeichnet durch** ein Zwischenstück (5), das an dem Ort des Federelements (3) angeordnet ist, an dem dieses die Normalkraft auf das Objekt (4) ausübt.

7. Nanopositionierer nach vorhergehendem Anspruch, **gekennzeichnet durch** eine derartige Form des Zwischenstücks (5), dass das Objekt (4) zwischen das Zwischenstück (5) und die Auflage (2) eingeschoben werden kann, ohne dabei das Federelement (3) separat manipulieren zu müssen.

8. Nanopositionierer nach einem der vorhergehenden 2 Ansprüche, **gekennzeichnet durch** eine derartige Form des Zwischenstücks (5), dass eine Kraft, mit der das zu bewegende Objekt (4) in den Spalt zwischen dem Zwischenstück (5) und der Auflage (2) eingeschoben wird, zumindest zum Teil in eine zu dieser Kraft senkrechte Komponente zum Öffnen des Spalts gegen die Rückstellkraft des Federelements (3) umgelenkt wird.

9. Nanopositionierer nach einem der vorhergehenden 3 Ansprüche, **dadurch gekennzeichnet, dass** das Zwischenstück (5) den gleichen Haft- und/oder Gleitreibungskoeffizienten gegen das Objekt (4) aufweist wie die Auflage (2).

10. Nanopositionierer nach einem der vorhergehenden Ansprüche, **dadurch gekennzeichnet, dass** die Geschwindigkeit, mit der die Auflage (2) bewegbar ist, in einem Bereich variabel ist, der sowohl eine langsame Bewegung, bei der die Auflage (2) in Haftreibung mit dem zu bewegenden Objekt (4) ist, als auch eine schnelle Bewegung, bei der die Auflage (2) gegen das Objekt (4) gleitet, umfasst.

11. Nanopositionierer nach einem der vorhergehenden Ansprüche, **dadurch gekennzeichnet, dass** das Stellglied (1) mindestens ein Piezoelement umfasst.

12. Nanopositionierer nach einem der vorhergehenden Ansprüche, **dadurch gekennzeichnet, dass** die Auflage (2) in zwei linear unabhängigen Richtungen bewegbar ist.

13. Nanopositionierer nach einem der vorhergehenden Ansprüche, **gekennzeichnet durch** eine derart ausgebildete Auflage (2), dass die Normalkraft zwischen drei voneinander beabstandeten Orten am zu bewegenden Objekt (4) und der Auflage (2) wirkt.

14. Nanopositionierer nach vorhergehendem Anspruch, **dadurch gekennzeichnet, dass** die Orte mit dem gleichen Stellglied (1) verbunden sind.

15. Nanopositionierer nach einem der vorhergehenden Ansprüche, **gekennzeichnet durch** mindestens zwei voneinander beabstandete Einheiten (A, B) aus Stellglied (1), Auflage (2) und Federelement (3), die so ausgebildet sind, dass sie verschiedene Bereiche desselben Objekts (4) bewegen können.

16. Nanopositionierer nach einem der vorhergehenden Ansprüche, **gekennzeichnet durch** ein Stützlager mit einer gegenüber der Bewegungsebene des Objekts (4) schrägen oder gerundeten Fläche, auf die das Objekt (4) verschiebbar ist.

17. Nanopositionierer nach einem der vorhergehenden Ansprüche, **dadurch gekennzeichnet, dass** die Auflage (2) und/oder das Zwischenstück (5) Stahl, Rubin, Quarz und/oder Saphir umfassen.

## Claims

1. Nanopositioner, comprising at least one actuator (1) with at least one support (2) for the object to be moved (4), which support (2) is movable by deflection of the actuator (1), and at least one spring element (3) which can subject the object (4) to be moved to a normal force acting between the object (4) and the support (2), the spring element (3) being connected to the support (2) in such a way that the state of tension of the spring element (3) is independent of the position of the object (4) to be moved,
**characterised in that**
the spring element (3) is connected to the support (2) in such a way that it is moved in one piece with the support (2) when the support (2) is moved.

2. Nanopositioner according to the preceding claim, **characterised in that** the object (4) is movable over a distance which is greater than the range of adjustment of the actuator (1).

3. Nanopositioner according to either of the preceding claims, **characterised in that** the support (2) is displaceable against the object (4) to be moved by movement of the actuator (1).

4. Nanopositioner according to any one of the preceding claims, **characterised in that** a point of the spring element (3) is connected to the support (2) and the spring element (3) extends to a point on a surface of the object (4) which is located opposite the surface of the object (4) which is in contact with the support (2), so that it exerts the normal force at that location.

5. Nanopositioner according to the preceding claim, **characterised in that** the spring element (3) is disposed around the location at which the object (4) to be moved is situated in operation, or passes through the object (4) to be moved to a point at which it exerts the normal force.

6. Nanopositioner according to any one of the preceding claims, **characterised by** an intermediate piece (5) which is arranged at the location of the spring element (3) at which the spring element (3) exerts the normal force on the object (4).

7. Nanopositioner according to the preceding claim, **characterised by** a shape of the intermediate piece (5) such that the object (4) can be inserted between the intermediate piece (5) and the support (2) without the need to manipulate the spring element (3) separately.

8. Nanopositioner according to either of the preceding two claims, **characterised by** a shape of the intermediate piece (5) such that a force with which the object (4) to be moved is inserted into the gap between the intermediate piece (5) and the support (2) is deflected at least in part to form a component perpendicular to this force in order to open the gap against the restoring force of the spring element (3).

9. Nanopositioner according to any one of the preceding three claims, **characterised in that** the intermediate piece (5) has the same coefficient of static and/or sliding friction against the object (4) as the support (2).

10. Nanopositioner according to any one of the preceding claims, **characterised in that** the speed with which the support (2) can be moved is variable within a range which includes both a slow movement in which the support (2) is in static friction with the object (4) to be moved, and also a fast movement in which the support (2) slides against the object (4).

11. Nanopositioner according to any one of the preceding claims, **characterised in that** the actuator (1) includes at least one piezo element.

12. Nanopositioner according to any one of the preceding claims, **characterised in that** the support (2) is movable in two linearly independent directions.

13. Nanopositioner according to any one of the preceding claims, **characterised by** a support (2) which is configured such that the normal force acts between three locations spaced from one another on the object (4) to be moved and the support (2).

14. Nanopositioner according to the preceding claim, **characterised in that** the locations are connected to the same actuator (1).

15. Nanopositioner according to any one of the preceding claims, **characterised by** at least two units (A, B) comprising actuator (1), support (2) and spring element (3), which units (A, B) are spaced apart and are configured such that they can move different areas of the same object (4).

16. Nanopositioner according to any one of the preceding claims, **characterised by** a bearing pad having an oblique or rounded surface with respect to the plane of movement of the object (4), on to which surface the object (4) is displaceable.

17. Nanopositioner according to any one of the preceding claims, **characterised in that** the support (2) and/or the intermediate piece (5) include/s steel, ruby, quartz and/or sapphire.

## Revendications

1. Nanopositionneur, comprenant au moins un actionneur (1) avec au moins un support (2) déplaçable par excursion de l'actionneur (1) pour l'objet (4) à déplacer ainsi qu'au moins un élément élastique (3), qui est capable d'appliquer sur l'objet (4) à déplacer une force normale agissant entre l'objet (4) et le support (2), l'élément élastique (3) étant relié au support (2) de telle sorte que l'état de contrainte de l'élément élastique (3) est indépendant de la position de l'objet (4) à déplacer,
**caractérisé en ce que**
l'élément élastique (3) est relié au support (2) de telle sorte que, en cas de déplacement du support (2), il est déplacé conjointement comme un ensemble.

2. Nanopositionneur selon la revendication précédente, **caractérisé en ce que** l'objet (4) est déplaçable sur une distance qui est supérieure à la plage de réglage de l'actionneur (1).

3. Nanopositionneur selon l'une des revendications précédentes, **caractérisé en ce que** le support (2) peut coulisser contre l'objet (4) à déplacer par déplacement de l'actionneur (1).

4. Nanopositionneur selon l'une des revendications précédentes, **caractérisé en ce qu'**un point de l'élément élastique (3) est relié au support (2) et l'élément élastique (3) est amené à un point sur une surface de l'objet (4) qui est opposée à la surface de l'objet (4) en contact avec le support (2), de sorte qu'il y exerce la force normale.

5. Nanopositionneur selon la revendication précédente, **caractérisé en ce que** l'élément élastique (3) est amené à un point, autour de l'endroit où se trouve l'objet (4) à déplacer en fonctionnement ou à travers l'objet (4) à déplacer, au niveau duquel il exerce la force normale.

6. Nanopositionneur selon l'une des revendications précédentes, **caractérisé par** une pièce intercalaire (5) qui est disposée à l'endroit de l'élément élastique (3) où celui-ci exerce la force normale sur l'objet (4).

7. Nanopositionneur selon la revendication précédente, **caractérisé par** une forme de la pièce intercalaire (5) telle que l'objet (4) peut être intercalé entre la pièce intercalaire (5) et le support (2), sans que l'élément élastique (3) ne doive être manipulé séparément.

8. Nanopositionneur selon l'une des 2 revendications précédentes, **caractérisé par** une forme de la pièce intercalaire (5) telle qu'une force avec laquelle l'objet (4) à déplacer est intercalé dans la fente entre la pièce intercalaire (5) et le support (2) est déviée au moins en partie selon une composante perpendiculaire à cette force pour ouvrir la fente contre la force de rappel de l'élément élastique (3).

9. Nanopositionneur selon l'une des 3 revendications précédentes, **caractérisé en ce que** la pièce intercalaire (5) présente le même coefficient de frottement statique et/ou dynamique contre l'objet (4) que le support (2).

10. Nanopositionneur selon l'une des revendications précédentes, **caractérisé en ce que** la vitesse à laquelle est déplaçable le support (2) est variable dans une plage qui comprend aussi bien un déplacement lent, dans lequel le support (2) est en frottement statique avec l'objet (4) à déplacer, qu'un déplacement rapide, dans lequel le support (2) glisse contre l'objet (4).

11. Nanopositionneur selon l'une des revendications précédentes, **caractérisé en ce que** l'actionneur (1) comprend au moins un élément piézoélectrique.

12. Nanopositionneur selon l'une des revendications précédentes, **caractérisé en ce que** le support (2) est déplaçable dans deux directions linéairement indépendantes.

13. Nanopositionneur selon l'une des revendications précédentes, **caractérisé en ce que** le support (2) est formé de telle sorte que la force normale agit sur l'objet (4) à déplacer et le support (2) entre trois endroits espacés les uns des autres.

14. Nanopositionneur selon la revendication précédente, **caractérisé en ce que** les endroits sont reliés par le même actionneur (1).

15. Nanopositionneur selon l'une des revendications précédentes, **caractérisé par** au moins deux unités (A, B) espacées l'une de l'autre composées de l'actionneur (1), du support (2) et de l'élément élastique (3), qui sont formées de telle sorte qu'elles peuvent déplacer différentes zones du même objet (4).

16. Nanopositionneur selon l'une des revendications précédentes, **caractérisé par** un palier d'appui avec une surface arrondie ou oblique par rapport au plan de déplacement de l'objet (4), sur laquelle l'objet (4) peut coulisser.

17. Nanopositionneur selon l'une des revendications précédentes, **caractérisé en ce que** le support (2) et/ou la pièce intercalaire (5) comprennent de l'acier, du rubis, du quartz et/ou du saphir.
